(19) Europäisches Patentamt
European Patent Office
Office européen des brevets

(11) **EP 4 209 124 B1**

(12) **EUROPÄISCHE PATENTSCHRIFT**

(45) Veröffentlichungstag und Bekanntmachung des Hinweises auf die Patenterteilung:
**28.01.2026 Patentblatt 2026/05**

(21) Anmeldenummer: **22213499.1**

(22) Anmeldetag: **14.12.2022**

(51) Internationale Patentklassifikation (IPC):
**A01D 41/127** (2006.01) **A01D 43/08** (2006.01)

(52) Gemeinsame Patentklassifikation (CPC):
**A01D 43/085; A01D 41/1271; A01D 43/08**

(54) **FELDHÄCKSLER**

CHAFF CUTTER

RÉCOLTEUSE-HACHEUSE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **05.01.2022 DE 102022100195**

(43) Veröffentlichungstag der Anmeldung:
**12.07.2023 Patentblatt 2023/28**

(73) Patentinhaber: **Maschinenfabrik Bernard Krone GmbH & Co. KG**
**48480 Spelle (DE)**

(72) Erfinder:
• **Kreyenhagen, Michael**
**49163 Bohmte (DE)**
• **Mösker, Markus**
**48480 Lünne (DE)**
• **de Vree, Willem Geurt**
**7881 CV Emmer-compascuum (NL)**
• **Grothus, Daniel**
**48488 Emsbüren (DE)**
• **Horstmann, Josef**
**49479 Ibbenbüren (DE)**

(56) Entgegenhaltungen:
EP-A1- 2 489 254     DE-A1- 102013 110 551
DE-A1- 4 041 995     US-A1- 2006 191 251

**Beschreibung**

Die vorliegende Erfindung betrifft einen Feldhäcksler nach dem Oberbegriff von Anspruch 1 sowie ein Verfahren zum Betreiben eines Feldhäckslers nach dem Oberbegriff von Anspruch 15.

Feldhäcksler werden in der Landwirtschaft zur Aufnahme, Verarbeitung und Verladung von Erntegut wie Gras, Heu, Mais oder dergleichen verwendet. Das Erntegut wird zunächst mit einem Erntevorsatz erfasst, der z.B. im Fall von Gras oder Heu das Erntegut vom Boden aufnehmen oder z.B. im Fall von Mais das Erntegut aus dem Bestand ernten kann. Der Erntevorsatz, welcher in der Regel auswechselbar ist, führt das Erntegut zu einer Einzugsvorrichtung bzw. Vorpressvorrichtung, die das Erntegut wiederum einer Häckselvorrichtung zuführt und zusammenpresst, um den Häckselvorgang zu erleichtern. Die Häckselvorrichtung ist eine wesentliche Komponente des Feldhäckslers und weist normalerweise eine drehbar angetriebene Häckseltrommel auf, an welcher ein Zerkleinern bzw. Schneiden des Ernteguts erfolgt. Der Häckselvorrichtung kann optional ein Aufbereiter nachgeordnet sein, insbesondere ein sog. Corncracker, der Maiskörner aufquetscht. Im Weiteren gelangt das Erntegut zu einem Nachbeschleuniger, der das Erntegut auf eine wesentlich höhere Geschwindigkeit beschleunigt, so dass dieses durch einen Auswurfbogen ausgeworfen und z.B. auf ein Begleitfahrzeug übergeladen werden kann. Mit dem Feldhäcksler aufbereiteter Mais kann z.B. zu Silage verarbeitet werden.

Die Einzugsvorrichtung weist normalerweise eine Mehrzahl von Walzenpaaren auf, wobei jeweils eine obere Vorpresswalze gegen eine untere Vorpresswalze verstellbar ist, um eine Öffnungsweite zu verändern. Letzteres ist notwendig, um eine Anpassung an den sich ändernden Umfang des Erntegutstroms zu ermöglichen. Die Walzen werden entsprechend einer ersten Fördergeschwindigkeit angetrieben, während die Häckseltrommel entsprechend einer zweiten Fördergeschwindigkeit angetrieben wird. Die erste Fördergeschwindigkeit entspricht der tatsächlichen Erntegutgeschwindigkeit, sofern kein Schlupf auftritt, und kann angepasst werden, um die Schnittlänge des Ernteguts zu verändern. In jedem Fall ist die zweite Fördergeschwindigkeit allerdings höher, d.h. die Häckseltrommel ist bestrebt, das Erntegut zu beschleunigen, weshalb sie eine Zugkraft auf das Erntegut ausübt. Wird z.B. bei vorübergehend geringer Bestandsdichte nur wenig Erntegut erfasst, besteht bei zu niedriger Presskraft die Gefahr, dass die Vorpresswalzen keinen ausreichenden Form- bzw. Kraftschluss mit dem Erntegut herstellen und die Häckseltrommel dieses zwischen den Vorpresswalzen hindurchzieht. Es kommt zu Schlupf, so dass sich die Schnittlänge nicht mehr kontrollieren lässt. Andererseits kann es vorkommen, dass die Erntegutgeschwindigkeit deutlich unter die erste Fördergeschwindigkeit sinkt, z.B. wenn bei niedriger Fördergeschwindigkeit viel Erntegut in den Einzugskanal gelangt und sich dort staut. Auch in diesem Fall kann die Schnittlänge nicht mehr kontrolliert werden, was sich z.B. nachteilig auf die Qualität von Silage auswirken kann. Darüber hinaus kann der Einzugskanal schlimmstenfalls verstopfen, wenn das Erntegut aufgrund von Schlupf nicht wie vorgesehen zur Häckselvorrichtung transportiert wird. In diesem Fall muss der Erntebetrieb unterbrochen werden, um die Verstopfung zu beheben.

Die Presskraft wird bei den meisten Feldhäckslern passiv eingestellt, wobei die obere Vorpresswalze durch wenigstens ein Federelement gegen die untere Vorpresswalze vorgespannt ist. Somit verringert sich die Presskraft mit abnehmender Öffnungsweite, was insbesondere bei geringem Erntegutstrom die Gefahr von Schlupf erhöht. Daneben ist auch bereits vorgeschlagen worden, die Presskraft hydraulisch einzustellen. Wenngleich dies prinzipiell eine Anpassung der Presskraft an die aktuellen Verhältnisse ermöglicht, sind die vorgeschlagenen Kriterien zur Einstellung der Presskraft oft unpräzise oder anfällig für Fehler.

Die Druckschrift DE 10 2013 110 551 A1 offenbart ein Verfahren zum Betreiben eines Feldhäckslers, das einen Sensor zur Ermittlung des Gutflusses vorsieht, wobei die Erntemaschine in Abhängigkeit von der tatsächlichen Transportgeschwindigkeit des abgetrennten Ernteguts betrieben wird.

Aufgabe der Erfindung ist es, bei einem Feldhäcksler eine verbesserte Kontrolle der Schnittlänge des Ernteguts zu ermöglichen.

Die Aufgabe wird gelöst mit einem Feldhäcksler mit den Merkmalen des unabhängigen

Patentanspruchs 1 und des unabhängigen Anspruchs 14. Vorteilhafte Ausführungsformen sind den abhängigen Ansprüchen entnehmbar.

Dafür wird ein Feldhäcksler geschaffen, mit einer Einzugsvorrichtung, die dazu ausgebildet ist, vom Feldhäcksler aufgenommenes Erntegut durch einen Einzugskanal einer Häckselvorrichtung zuzuführen und durch Ausüben einer Presskraft vorzupressen, und die zur Anpassung einer Öffnungsweite des Einzugskanals verstellbar ist. Im Betrieb ist der Einzugsvorrichtung normalerweise ein Erntevorsatz vorgeschaltet (z.B. ein Maiserntevorsatz oder eine Pick-up), welcher nach Bedarf an den Feldhäcksler angekoppelt werden kann. In der Regel nimmt der Feldhäcksler das Erntegut mittels des Erntevorsatzes auf. Die Einzugsvorrichtung übernimmt das Erntegut vom Erntevorsatz und fördert es durch den Einzugskanal in Richtung auf die Häckselvorrichtung. Die Häckselvorrichtung selbst dient zum Zerkleinern bzw. Schneiden des Ernteguts. Sowohl die Einzugsvorrichtung als auch die Häckselvorrichtung sind motorisch antreibbar bzw. weisen motorisch antreibbare Komponenten auf.

Neben dem Zuführen des Ernteguts zur Häckselvorrichtung dient die Einzugsvorrichtung auch zum Vorpressen des Ernteguts, wozu eine Presskraft ausgeübt wird, während das Erntegut den Einzugskanal durchläuft. Die Einzugsvorrichtung ist verstellbar, wodurch eine Öffnungsweite des Einzugskanals veränderbar ist. Die Öffnungsweite entspricht normalerweise zumindest ungefähr einer vertikalen Ausdehnung des Einzugskanals. Soweit die Einzugsvorrichtung mit dem Erntegut in Kontakt steht, entspricht die Öffnungsweite auch der Ausdehnung des Erntegutstroms quer zu dessen Förderrichtung. Wenngleich hier von "einer" Presskraft sowie "einer" Öffnungsweite die Rede ist, versteht es sich, dass sowohl die Presskraft als auch die Öffnungsweite lokal unterschiedlich sein können. Insbesondere kann die Einzugsvorrichtung aktorisch - also durch wenigstens eine Aktor - verstellbar sein. Eine aktorische Verstellbarkeit schließt jedoch nicht aus, dass die Einzugsvorrichtung bspw. zeitweise passiv verstellbar ist oder dass sie anteilig passiv verstellbar ist, z.B. dadurch, dass ein Aktor und ein passives Federelement bezüglich des Kraftflusses in Reihe angeordnet sind.

Bevorzugt weist die Häckselvorrichtung eine motorisch antreibbare Häckseltrommel auf. Die Häckseltrommel weist eine Mehrzahl von in Umfangsrichtung verteilten Messern bzw. Schneidorganen auf, die an einer stationären Gegenschneide vorbeigeführt werden. Das zwischen Messer und Gegenschneide gelangende Erntegut wird entsprechend geschnitten bzw. gehäckselt. Die Häckseltrommel ist um eine Trommelachse drehbar gelagert, welche in aller Regel in Querrichtung des Feldhäckslers verläuft.

Ebenfalls bevorzugt weist die Einzugsvorrichtung wenigstens ein Walzenpaar zum Ausüben der Presskraft auf das Erntegut auf, mit einer unteren Vorpresswalze und einer oberen Vorpresswalze, welche zur Anpassung der Öffnungsweite relativ zueinander verstellbar sind. Wenigstens eine Vorpresswalze des jeweiligen Walzenpaars ist motorisch antreibbar, normalerweise gilt dies für beide Walzen. Der motorische Antrieb kann durch den gleichen Motor erfolgen wie der Antrieb der Häckseltrommel, allerdings sind die Drehzahlen der Vorpresswalze(n) einerseits sowie der Häckseltrommel andererseits voneinander unabhängig. Somit ist es möglich, die Vorpresswalzen für kürzere Schnittlängen langsamer laufen zu lassen und für längere Schnittlängen schneller laufen zu lassen. Normalerweise sind die obere und untere Vorpresswalze um parallele Walzenachsen drehbar, wobei die Walzenachse der unteren Vorpresswalze stationär am Feldhäcksler bzw. an einem Rahmen desselben angeordnet ist, während die Walzenachse der oberen Vorpresswalze (z.B. aktorisch) verstellbar ist. Z.B. kann die obere Vorpresswalze an einem Schwenkarm drehbar gelagert sein. Im Fall mehrerer Walzenpaare können die oberen Vorpresswalzen gemeinsam an einem einzigen verstellbaren Element (z.B. Schwenkarm) gelagert sein, so dass sie gemeinsam verstellbar sind.

Erfindungsgemäß ist eine Erntegutgeschwindigkeit $v_G$ im Bereich des Einzugskanals durch wenigstens einen Sensor erfassbar und eine Steuereinheit ist dazu eingerichtet, anhand einer Differenz $\Delta v$ zwischen einer Fördergeschwindigkeit $v_F$ der Einzugsvorrichtung sowie der erfassten Erntegutgeschwindigkeit $v_G$ einen wesentlichen Schlupf S zu erkennen und daraufhin wenigstens eine Gegenmaßnahme einzuleiten, um dem Schlupf entgegenzuwirken. Die Erntegutgeschwindigkeit entspricht dabei einer aktuell gemessenen Geschwindigkeit des Ernteguts im Bereich des Einzugskanals, also entweder innerhalb oder zumindest angrenzend an den Einzugskanal (z.B. im bzw. am Erntevorsatz, kurz vor dem Einzugskanal). D.h., dies ist die Geschwindigkeit, mit der sich das Erntegut tatsächlich bewegt. Diese wird sensorisch erfasst. Ein "Erfassen" der Erntegutgeschwindigkeit durch den Sensor bedeutet hier und im Folgenden, dass der Sensor wenigstens einen Messwert liefert, aus dem sich die Erntegutgeschwindigkeit eindeutig ergibt. Allgemein kann der jeweilige Sensor innerhalb der Einzugsvorrichtung (z.B. zwischen benachbarten Walzenpaaren) oder benachbart zu dieser angeordnet sein, z.B. bezüglich des Erntegutstroms unmittelbar vor der Einzugsvorrichtung. Die Fördergeschwindigkeit ist die Geschwindigkeit, mit welcher die Einzugsvorrichtung das Erntegut zu fördern versucht. Man kann sagen, dass dies die vorgegebene Soll-Geschwindigkeit des Ernteguts ist, während die Erntegutgeschwindigkeit die Ist-Geschwindigkeit darstellt. Die Fördergeschwindigkeit ist normalerweise die Geschwindigkeit derjenigen Teile der Einzugsvorrichtung, die dazu vorgesehen sind, mit dem Erntegut in Kontakt zu stehen und dieses zu fördern, im Falle von Vorpresswalzen also die Geschwindigkeit des äußersten Teils der Walze, welcher mit dem Erntegut in Kontakt steht bzw. stehen sollte. Diese ist proportional zur Drehzahl der Walze. Die Fördergeschwindigkeit ist normalerweise seitens des Feldhäckslers vorgegeben und muss daher nicht zwangsläufig gemessen werden. Es kann allerdings auch z.B. ein Sensor vorgesehen sein, der zur Messung der Fördergeschwindigkeit dient, z.B. ein Drehzahlsensor für eine Vorpresswalze. Tritt kein Schlupf auf, sind die beiden Geschwindigkeiten identisch. Bei einer Abweichung liegt aktuell ein Schlupf vor.

Erfindungsgemäß erkennt die Steuereinheit, die teilweise auch softwaremäßig implementiert sein kann, anhand der Differenz $\Delta v$ einen wesentlichen Schlupf S zwischen dem Erntegut und der Einzugsvorrichtung und leitet daraufhin wenigstens eine Gegenmaßnahme ein, um dem Schlupf entgegenzuwirken. Die Differenz wird berechnet als

$$\Delta v = v_F - v_G.$$

Die Erntegutgeschwindigkeit könnte niedriger als die Fördergeschwindigkeit sein, was bedeuten würde, dass die Einzugsvorrichtung das Erntegut nicht wie vorgesehen der Häckselvorrichtung zuführt. In diesem Fall ist die Differenz positiv. Der Schlupf S kann definiert werden als:

$$S = \frac{V_F - V_G}{V_F}$$

Daher kann man in diesem Fall auch sagen, es liegt ein positiver Schlupf vor. Die Erntegutgeschwindigkeit könnte aber insbesondere auch höher sein als die Fördergeschwindigkeit, was daran liegen kann, dass die Häckselvorrichtung das von ihr bereits erfasste Erntegut durch die Einzugsvorrichtung hindurchzieht. In diesem Fall ist die Differenz negativ, man kann auch sagen, es liegt ein negativer Schlupf vor. Beide Arten von Schlupf sind unerwünscht, da sie beim Häckseln zu einer wesentlichen Abweichung von der vorgesehenen Schnittlänge des Ernteguts führen, was sich wiederum nachteilig auf die Qualität des gehäckselten Ernteguts auswirkt. Außerdem kann ein positiver Schlupf dazu führen, dass der Einzugskanal verstopft, weil zwar durch den Erntevorsatz weiter Erntegut in den Einzugskanal gefördert wird, dieses aber nicht ausreichend schnell weitertransportiert wird. Die Steuereinheit kann den wesentlichen Schlupf durch direkte sensorische Erfassung des Ernteguts erkennen und eine oder mehrere Gegenmaßnahmen ergreifen. Hierzu bestehen unterschiedliche Möglichkeiten, von denen einige nachfolgend erläutert werden. Gegenmaßnahmen werden bei einem als wesentlich eingestuften Schlupf eingeleitet, was die Möglichkeit einschließt, dass bei einem als irrelevant bzw. unwesentlich eingestuften Schlupf keine Gegenmaßnahmen erfolgen. Da der Schlupf gewissermaßen direkt anhand der Erntegutgeschwindigkeit sowie der Fördergeschwindigkeit erkannt wird, ist es kaum möglich, dass ein Schlupf unerkannt bleibt oder dass fälschlicherweise ein Schlupf erkannt wird. Somit ist erfindungsgemäß eine hohe Zuverlässigkeit bei der Erkennung und der Einleitung von Gegenmaßnahmen sichergestellt.

Qualitativ tritt auch beim störungsfreien Betrieb des Feldhäckslers eine gewisse Differenz zwischen der Fördergeschwindigkeit und der Erntegutgeschwindigkeit auf. D.h. in diese Sinne ist ein gewisses Maß an Schlupf normal bzw. unvermeidlich. Um dem Rechnung zu tragen, ist die Steuereinheit bevorzugt dazu eingerichtet, einen wesentlichen Schlupf daran zu erkennen, dass der Absolutwert der Differenz $\Delta v$ über einem definierten Minimalwert $v_{min}$ liegt (welcher die Dimension einer Geschwindigkeit hat). D.h. nur wenn die Erntegutgeschwindigkeit wenigstens um den Minimalwert (nach oben oder unten) von der Fördergeschwindigkeit abweicht, wird dies als wesentlicher Schlupf bewertet, man könnte auch sagen, als relevanter Schlupf. Liegt der Absolutwert unter diesem Minimalwert, wird dies als unwesentlich bzw. irrelevant bewertet und es erfolgen keine Gegenmaßnahmen. Ein solcher Minimalwert kann auch sinnvoll sein, um eine mögliche Ungenauigkeit bei der Ermittlung der Geschwindigkeiten zu berücksichtigen. Alternativ kann auch (mit der obigen Definition des Schlupfes S) geprüft werden, ob der Absolutwert des Schlupfs über einem definierten Minimalwert liegt (welcher in diesem Fall dimensionslos ist).

Unter Umständen kann es kontraproduktiv sein, wenn die Steuereinheit bei jedem kurzzeitigen Auftreten von Schlupf sofort eine Gegenmaßnahme einleitet. Im Betrieb kann ein kurzzeitiger Schlupf auftreten oder auch aufgrund von Messfehlern fälschlich erkannt werden, ohne dass dies den Häckselbetrieb beeinflussen muss. Vorteilhaft ist die Steuereinheit dazu eingerichtet, einen wesentlichen Schlupf daran zu erkennen, dass der Minimalwert $v_{min}$ während eines vorgegebenen ersten Zeitintervalls durchgehend überschritten wird. Das erste Zeitintervall, welches auch als erste Zeitspanne bezeichnet werden kann, ist vorgegeben bzw. vordefiniert. Der Schlupf wird als wesentlich erkannt und die wenigstens eine Gegenmaßnahme wird eingeleitet, wenn der Minimalwert während des gesamten ersten Zeitintervalls überschritten wird. D.h., die Steuereinheit zieht nicht nur die momentane Differenz als Kriterium heran, sondern sämtliche (bekannten) Werte der Differenz innerhalb des ersten Zeitintervalls. Das erste Zeitintervall sollte hinreichend lang sein, um irrelevante kurzzeitige Ereignisse auszufiltern, aber auch hinreichend kurz, um rechtzeitig auf relevante Ereignisse reagieren zu können.

Alternativ oder zusätzlich kann die Steuereinheit dazu eingerichtet sein, einen wesentlichen Schlupf daran zu erkennen, dass der Minimalwert $v_{min}$ während eines vorgegebenen zweiten Zeitintervalls mehrmals überschritten wird. Der Minimalwert wird also während des zweiten Zeitintervalls nicht durchgehend überschritten, aber mehrmals bzw. wiederholt. Auch dies kann auf ein zumindest beginnendes Problem hindeuten, selbst wenn noch kein durchgehender Schlupf erkannt wird. Dabei kann eine gewisse Anzahl definiert sein, wie oft der Minimalwert überschritten werden muss, z.B. zweimal, dreimal oder auch häufiger. Auch bei dieser Ausführungsform wird nicht nur die momentane Differenz als Kriterium herangezogen, sondern der Verlauf der Differenz innerhalb des zweiten Zeitintervalls (soweit bekannt). Wenngleich hier begrifflich zwischen erstem und zweitem Zeitintervall unterschieden wird, ist es möglich, dass diese Zeitintervalle die gleiche Länge aufweisen. Die Steuereinheit kann hierbei auch ein und dasselbe Zeitintervall betrachten und zunächst prüfen, ob der Minimalwert durchgehend überschritten wurde und falls nein, ob er mehrmals überschritten wurde. Normalerweise ist das erste Zeitintervall allerdings kürzer als das zweite Zeitintervall.

Bevorzugt ist die Steuereinheit dazu eingerichtet, festzustellen, wenn eine Gegenmaßnahme unzureichend ist, um dem Schlupf entgegenzuwirken, und daraufhin wenigstens eine folgende Gegenmaßnahme einzuleiten. D.h. die Steuereinheit leitet eine Gegenmaßnahme ein und überprüft - z.B. nach einer definierten Wartezeit - ob sich der Schlupf verringert hat bzw. ob er dies ausreichend schnell getan hat (z.B. ob sich der Absolutwert der Differenz innerhalb der Wartezeit um einen definierten Prozentsatz reduziert hat). Ist dies nicht der Fall, könnte zum einen die erste Gegenmaßnahme verstärkt werden. Zum anderen kann eine zweite Gegenmaßnahme eingeleitet werden. Dies kann zusätzlich zur ersten Gegenmaßnahme erfolgen, u.U. aber auch statt der ersten Gegenmaßnahme. Die Wirksamkeit der zweiten Gegenmaßnahme kann wieder überprüft werden. Falls auch diese zweite Gegenmaßnahme (evtl. zusammen mit der ersten Gegenmaßnahme) unzureichend ist, wird zusätzlich oder alternativ eine dritte Gegenmaßnahme eingeleitet. Es können noch weitere Gegenmaßnahmen folgen. D.h. es werden stufenweise Gegenmaßnahmen eingeleitet, wobei die Reihenfolge nach unterschiedlichen Kriterien gewählt werden kann, z.B. danach, welche Maßnahmen am schnellsten durchzuführen sind bzw. welche Maßnahmen den geringsten Eingriff in den Häckselbetrieb bedeuten.

Bevorzugt ist die Einzugsvorrichtung aktorisch verstellbar und die Steuereinheit ist dazu eingerichtet, die Presskraft aktorisch zu beeinflussen, wobei eine Gegenmaßnahme darin besteht, die Presskraft zu erhöhen. Es ist also wenigstens ein Aktor vorgesehen, durch den die Einzugsvorrichtung zur Veränderung der Einzugsweite aktiv verstellt werden kann. Außerdem kann durch den wenigstens einen Aktor die Presskraft beeinflusst werden, evtl. auch eingestellt werden. Die Steuereinheit ist mit dem wenigstens einen Aktor verbunden, durch welchen die Öffnungsweite einstellbar ist, und kann über diesen die Presskraft beeinflussen. Die Steuereinheit ist dazu eingerichtet, die Presskraft aktorisch zu beeinflussen, was insbesondere bedeuten kann, dass sie die Presskraft aktorisch einstellen kann. In vielen Fällen wirkt sich eine Änderung der Presskraft auch zumindest geringfügig auf die Öffnungsweite aus und umgekehrt, bspw. dadurch, dass das Erntegut einer Erhöhung der Presskraft nachgibt, wodurch sich die Öffnungsweite verringert. Grundsätzlich ist es jedoch möglich, die Presskraft unabhängig von der Öffnungsweite zu erzeugen bzw. bei einer gegebenen Öffnungsweite unterschiedliche Presskräfte zu erzeugen. Als eine Gegenmaßnahme erhöht die Steuereinheit die Presskraft. Unabhängig davon, ob ein positiver oder negativer Schlupf vorliegt, lässt sich dieser in der Regel durch eine höhere Presskraft beheben oder zumindest reduzieren, da hierdurch der Kraftschluss zwischen Erntegut und Einzugsvorrichtung (z.B. Vorpresswalzen) verstärkt wird. Die Erhöhung der Presskraft kann insbesondere die erste (bzw. einzige) Gegenmaßnahme bilden. Im Falle von wenigstens einem Walzenpaar ist die wenigstens eine obere Vorpresswalze mittels wenigstens eines Aktors relativ zur unteren Vorpresswalze verstellbar. Des Weiteren ist - normalerweise durch den gleichen Aktor bzw. die gleichen Aktoren - die Presskraft beeinflussbar, die das Walzenpaar ausübt.

Die aktorische Verstellung der Einzugsvorrichtung kann beispielsweise elektrisch oder pneumatisch erfolgen. Bevorzugt ist die Einzugsvorrichtung hydraulisch verstellbar, um die Einzugsweite zu verändern. Im Falle wenigstens eines Walzenpaars ist dabei eine (normalerweise die obere) Vorpresswalze wenigstens eines Walzenpaars hydraulisch verstellbar. Wie bereits oben erläutert wurde, können die oberen Vorpresswalzen mehrerer Walzenpaare an einem gemeinsamen Aufhängungselement wie einem Schwenkarm drehbar gelagert sein. In diesem Fall kann ein einzelner hydraulischer Aktor (oder zwei symmetrisch bezüglich der Längsmittelebene des Feldhäckslers angeordnete Aktoren) auf das Aufhängungselement wirken, so dass die oberen Vorpresswalzen gleichzeitig verstellt werden.

Ebenfalls bevorzugt ist die Steuereinheit dazu eingerichtet, die Fördergeschwindigkeit $v_F$ zu beeinflussen, wobei eine Gegenmaßnahme darin besteht, die Fördergeschwindigkeit $v_F$ zu erhöhen. Die Erhöhung der Fördergeschwindigkeit führt dazu, dass sich die Schnittlänge erhöht, zumindest annähernd proportional zur Fördergeschwindigkeit. Dies ist zwar langfristig unerwünscht, kann aber zwischenzeitlich hingenommen werden, insbesondere wenn die Erhöhung der Fördergeschwindigkeit begrenzt ist, z.B. auf maximal 20%. Dadurch, dass die Fördergeschwindigkeit erhöht wird, kann Erntegut schneller aus dem Einzugskanal heraus zur Häckselvorrichtung gefördert werden. Somit wird die Gefahr einer Verstopfung des Einzugskanals verringert. Diese Gegenmaßnahme ist bevorzugt bei einem positiven Schlupf vorgesehen. Wenn erkannt wird, dass sich der Schlupf wieder reduziert hat, kann die Fördergeschwindigkeit wieder auf den ursprünglichen Wert reduziert werden.

Ebenfalls bevorzugt ist die Steuereinheit dazu eingerichtet, eine Fahrgeschwindigkeit des Feldhäckslers zu beeinflussen, wobei eine Gegenmaßnahme darin besteht, die Fahrgeschwindigkeit zumindest zu begrenzen. "Begrenzen" bedeutet hierbei, dass eine Erhöhung der Fahrgeschwindigkeit verhindert wird. Die Fahrgeschwindigkeit kann durch die Steuereinheit insbesondere auch reduziert werden. Der gesamte Erntegutdurchsatz, d.h. die Menge an Erntegut, die pro Zeiteinheit aufgenommen wird, hängt zum einen von der Bestandsdichte ab sowie zum anderen von der Fahrgeschwindigkeit. Da die Bestandsdichte nicht beeinflussbar ist, stellt eine Begrenzung bzw. Reduzierung der Fahrgeschwindigkeit die einzige Möglichkeit dar, den Erntegutdurchsatz aktiv zu beschränken oder zu reduzieren. Hierdurch kann ebenfalls einer Verstopfung des Einzugskanals entgegengewirkt werden. Auch diese Gegenmaßnahme ist bevorzugt bei einem positiven Schlupf vorgesehen. Wenn erkannt wird, dass sich der Schlupf wieder reduziert hat, kann die Begrenzung der Fördergeschwindigkeit wieder aufgehoben werden. Bei einem negativen Schlupf, der normalerweise bei geringer Bestandsdichte auftritt, könnte die Steuereinheit die Fahrgeschwindigkeit erhöhen.

Ein positiver Schlupf kann so weit gehen, dass trotz aktiver Einzugsvorrichtung der Erntegutstrom stoppt, d.h. die Erntegutgeschwindigkeit $v_G$ Null beträgt. Dann gilt für den Schlupf S=1, man könnte auch sagen, der Schlupf S beträgt 100%. Eine solche Situation führt in aller Regel zur Verstopfung des Einzugskanals, die bei fahrendem Feldhäcksler nicht mehr behoben werden kann. Es kann zu einer völligen Blockierung der Einzugsvorrichtung kommen, gefolgt von einer Überlastung und ggf. Abschaltung des Erntevorsatzes. Sofern der Fahrer dies nicht rechtzeitig merkt, könnte der Feldhäcksler mit inaktivem Erntevorsatz weiterfahren und z.B. die Pflanzen im Bestand umfahren. Um dies zu verhindern, kann die Steuereinheit dazu eingerichtet sein, den Feldhäcksler zu stoppen, wenn bei positiver Differenz die Erntegutgeschwindigkeit $v_G$ Null beträgt. D.h. die Fahrgeschwindigkeit wird auf Null reduziert, womit kein weiteres Erntegut mehr aufgenommen wird.

Wie bereits oben erwähnt, bildet ein Erhöhen der Presskraft bevorzugt eine erste Gegenmaßnahme. D.h. wenn ein (positiver oder negativer) wesentlicher Schlupf erkannt wird, wird zunächst die Presskraft erhöht. Dies bedeutet einen geringen Eingriff in den Betrieb des Feldhäckslers und beeinflusst z.B. nicht zwangsläufig die Schnittlänge. Im Falle einer positiven Differenz (wenn also die Erntegutgeschwindigkeit unter der Fördergeschwindigkeit liegt) bildet bevorzugt ein Erhöhen der Fördergeschwindigkeit eine zweite Gegenmaßnahme und ein Begrenzen der Fahrtgeschwindigkeit bildet eine dritte Gegenmaßnahme. Die zweite und dritte Gegenmaßnahme wären bei negativer Differenz bzw. negativem Schlupf normalerweise sinnlos oder sogar kontraproduktiv, bei positivem Schlupf sind sie allerdings sinnvoll. Die Erhöhung der Fördergeschwindigkeit stellt einen größeren Eingriff dar als die Erhöhung der Presskraft, da sie zwangsläufig die Schnittlänge erhöht. Die Beschränkung oder Reduzierung der Fahrgeschwindigkeit stellt einen noch stärkeren Eingriff dar. Deshalb ist es sinnvoll die Gegenmaßnahmen in der beschriebenen Reihenfolge einzuleiten.

Abgesehen von der Betrachtung des Schlupfs bzw. der Differenz an sich, ist die Steuereinheit erfindungsgemäß dazu eingerichtet, eine zeitliche Veränderung des Schlupfs S zu erkennen und in Abhängigkeit hiervon die wenigstens eine Gegenmaßnahme auszuwählen. Man kann auch sagen, dass eine zeitliche Veränderung der Differenz $\Delta v$ erkannt wird. Hierzu wird die Differenz $\Delta v$ zu unterschiedlichen Zeitpunkten ermittelt und hieraus eine zeitlicher Veränderung (ein zeitlicher Gradient) ermittelt. Die zeitliche Veränderung der Differenz hat dabei die Dimension einer Beschleunigung. Anschaulich beschreibt diese, ob und wie stark die Einzugsvorrichtung gegenüber dem Erntegutstrom beschleunigt bzw. bei negativer Veränderung, wie stark der Erntegutstrom gegenüber der Einzugsvorrichtung beschleunigt. Hierbei ist eine Vielzahl von Anwendungen denkbar. Z.B. kann erkannt werden, dass die Differenz und die Veränderung entgegengesetzte Vorzeichen haben, so dass sich die Differenz Null annähert. Als Ergebnis hiervon kann die derzeitige Anzahl der Gegenmaßnahmen beibehalten oder sogar reduziert werden bzw. die dritte Gegenmaßnahme kann durch die zweite Gegenmaßnahme ersetzt werden oder dergleichen. Umgekehrt können zusätzliche und/oder stärkere Gegenmaßnahmen eingeleitet werden, wenn Differenz und Veränderung das gleiche Vorzeichen aufweisen. Dabei kann die wenigstens eine Gegenmaßnahme auch in Abhängigkeit vom Betrag der zeitlichen Veränderung ausgewählt werden. Dies kann insbesondere bei einer positiven Differenz bzw. bei positivem Schlupf geschehen. Liegt die zeitliche Veränderung unterhalb eines ersten Schwellwerts, kann beispielsweise nur die erste Gegenmaßnahme eingeleitet (z.B. die Erhöhung der Presskraft). Liegt die Veränderung über dem ersten, aber unter einem zweiten Schwellwert, können unmittelbar sowohl die erste, als auch die zweite Gegenmaßnahme (z.B. die Erhöhung der Fördergeschwindigkeit) eingeleitet werden.

Liegt die Veränderung über dem zweiten Schwellwert, können unmittelbar die erste, zweite und dritte Gegenmaßnahme (z.B. Beschränkung der Fahrgeschwindigkeit) eingeleitet werden. D.h. die zweite bzw. dritte Gegenmaßnahme werden eingeleitet, ohne zu prüfen, ob die erste Gegenmaßnahme für sich wirksam gewesen wäre.

Es wird in diesem Zusammenhang als eigenständige Erfindung angesehen, einen Feldhäcksler nach dem Oberbegriff des Anspruchs 1 bereitzustellen, bei dem eine Erntegutgeschwindigkeit $v_G$ im Bereich des Einzugskanals durch wenigstens einen Sensor erfassbar ist und eine Steuereinheit dazu eingerichtet ist, anhand einer Differenz $\Delta v$ zwischen einer Fördergeschwindigkeit $v_F$ der Einzugsvorrichtung und der erfassten Erntegutgeschwindigkeit $v_G$ eine zeitliche Veränderung eines Schlupfs S zwischen dem Erntegut und der Einzugsvorrichtung zu erkennen und in Abhängigkeit hiervon wenigstens eine Gegenmaßnahme auszuwählen und einzuleiten, um dem Schlupf S entgegenzuwirken. Dabei könnte das Einleiten der wenigstens einen Gegenmaßnahme u.U. auch unabhängig vom Erkennen eines wesentlichen Schlupfs erfolgen.

Eine Ausführungsform sieht vor, dass die Erntegutgeschwindigkeit durch wenigstens einen Sensor berührungslos erfassbar ist. Der Sensor muss also keinen physischen Kontakt zum Erntegut haben, um die Erntegutgeschwindigkeit zu erfassen. Dies ist insofern vorteilhaft, als der Sensor z.B. keinem mechanischen Verschleiß durch das Erntegut ausgesetzt werden muss.

Wenigstens ein Sensor kann als aktiver Sensor dazu ausgebildet sein, ein Detektionssignal zum Erntegut zu senden und vom Erntegut ein Reflexionssignal zu empfangen. Ein solcher aktiver Sensor ist insofern effektiv, als er sein Detektionssignal selbst erzeugt, welches vom Erntegut wenigstens teilweise reflektiert wird und als Reflexionssignal empfangen wird. Aus diesem Reflexionssignal wird dann die Erntegutgeschwindigkeit ermittelt, was insbesondere auf einer Frequenzverschiebung durch Doppler-Effekt beruhen kann. Dabei kann das Detektionssignal insbesondere ein Ultraschallsignal oder ein elektromagnetisches Signal sein. In beiden Fällen kann eine Doppler-Verschiebung zwischen dem Detektionssignal und dem Reflexionssignal genutzt werden, um die Geschwindigkeit des Ernteguts relativ zum Sensor zu ermitteln. Statt einer Auswertung der Doppler-Verschiebung wären auch andere Methoden denkbar, z.B. das Auswerten der Laufzeit von Impulsen, aus denen das Detektionssignal zusammengesetzt ist. Im Falle eines elektromagnetischen Signals kann insbesondere ein Radar- oder Lidar-Sensor eingesetzt werden.

Es wäre auch denkbar, das Erntegut mit einer Kamera laufend zu erfassen und mittels Bilderkennung Strukturen im Erntegutstrom zu identifizieren, womit sich deren Bewegungsgeschwindigkeit durch einen Vergleich nacheinander aufgenommener Bilder ermitteln ließe. Je nach Position der Kamera kann das Erntegut beleuchtet werden, um den Bildkontrast zu verbessern. Die Kamera kann sichtbares Licht und/oder Infrarotlicht aufnehmen.

Normalerweise alternativ zu einem berührungslos arbeitenden Sensor kann die Erntegutgeschwindigkeit durch wenigstens einen Sensor durch Kontakt mit dem Erntegut erfassbar sein. Das Erntegut kann also physisch auf den Sensor einwirken und durch diese Einwirkung lässt sich die Erntegutgeschwindigkeit bestimmen. Unter Umständen kann ein solcher Sensor weniger fehleranfällig sein als ein berührungslos arbeitender Sensor, er kann kostengünstiger sein oder sein Signal kann einfacher auszuwerten sein. Es könnten auch ein berührungsloser Sensor und ein "Kontaktsensor" gleichzeitig eingesetzt werden, um durch zwei unabhängige Messungen der Erntegutgeschwindigkeit die Zuverlässigkeit zu erhöhen.

Ein solcher das Erntegut berührender Sensor kann insbesondere ein drehbar gelagertes Radelement aufweisen, das dazu ausgebildet ist, mit dem Erntegut einzugreifen und durch dessen Bewegung passiv mitgedreht zu werden. Das Radelement, das z.B. als Spornrad ausgebildet sein kann, wirkt über einen Kraftschluss und/oder insbesondere einen Formschluss mit dem Erntegut zusammen. Während sich das Erntegut am Radelement vorbeibewegt, wird das Radelement passiv mitgedreht. Somit kann aus der Drehzahl bzw. Winkelgeschwindigkeit des Radelements die Erntegutgeschwindigkeit abgeleitet werden.

Vorteilhaft ist die Steuereinheit dazu eingerichtet, während einer Anlaufzeit nach dem Start der Einzugsvorrichtung eine geringere Presskraft einzustellen als nach Ende der Anlaufzeit. D.h. eine Anlaufzeit nach dem Start der Einzugsvorrichtung wird von der Steuereinheit gesondert behandelt. Während der Anlaufzeit können auch die oben beschriebenen Gegenmaßnahmen zur Schlupfverhinderung vorübergehend ausgesetzt werden, d.h. es könnte vorübergehend trotz eines erkannten Schlupfs keine Erhöhung der Presskraft erfolgen. Durch die geringere Presskraft während der Anlaufzeit kann die Steuereinheit ein Anlaufen bzw. Wiederanlaufen der Einzugsvorrichtung unterstützen. Dies kann insbesondere nach einer Verstopfung der Einzugsvorrichtung sinnvoll sein. Eine solche Verstopfung kann zur Überlastung und Abschaltung der Einzugsvorrichtung bzw. des zugehörigen Motors führen. Danach muss die Einzugsvorrichtung evtl. kurzzeitig in Gegenrichtung betrieben werden, um das eingeklemmte Erntegut zumindest teilweise aus der Einzugsvorrichtung zu entfernen. Beim Wiederanlaufen liegt oftmals eine große Menge z.T. vorkomprimierten Ernteguts gewissermaßen als Paket am Eingang der Einzugsvorrichtung vor. Wird anfänglich eine zu große Presskraft eingestellt, wird es schwierig, das vorkomprimierte Paket in die Einzugsvorrichtung (z.B. zwischen die Walzenpaare) einzuführen. Die Einzugsvorrichtung kann ihre Öffnungsweite schlechter in der Weise anpassen, wie es zur Aufnahme des Pakets notwendig wäre. Schlimmstenfalls kann es sofort wieder zu einer Verstopfung kommen. Um dies zu verhindern, wird während einer Anlaufzeit eine geringere Presskraft eingestellt, welche zum Ende der Anlaufzeit oder danach erhöht werden kann. Hierdurch kann sich ein Erntegutstrom anfänglich besser aufbauen. Dies gilt u.U. auch unabhängig davon, ob eine Verstopfung vorgelegen hat.

Durch die Erfindung wird außerdem ein Verfahren geschaffen zum Betreiben eines Feldhäckslers mit einer Einzugsvorrichtung, die vom Feldhäcksler aufgenommenes Erntegut durch einen Einzugskanal einer Häckselvorrichtung zuführt und durch Ausüben einer Presskraft vorpresst und die zur Anpassung einer Öffnungsweite des Einzugskanals verstellbar ist.

Erfindungsgemäß wird eine Erntegutgeschwindigkeit im Bereich des Einzugskanals durch wenigstens einen Sensor erfasst, anhand einer Differenz zwischen einer Fördergeschwindigkeit der Einzugsvorrichtung und der erfassten Erntegutgeschwindigkeit wird ein bestehender Schlupf zwischen dem Erntegut und der Einzugsvorrichtung erkannt und daraufhin wird wenigstens eine Gegenmaßnahme eingeleitet, um dem Schlupf entgegenzuwirken.

Die genannten Begriffe wurden bereits oben mit Bezug auf den erfindungsgemäßen Feldhäcksler erläutert und werden daher nicht nochmals erklärt. Vorteilhafte Ausgestaltungen des erfindungsgemäßen Verfahrens entsprechen denen des erfindungsgemäßen Feldhäckslers. Selbstverständlich kann das Erkennen des Schlupfs sowie das Beeinflussen der Presskraft bevorzugt durch eine oben genannte Steuereinheit erfolgen, die in den Feldhäcksler integriert ist.

Im Folgenden wird die Erfindung anhand von Figuren beschrieben. Die Figuren sind lediglich beispielhaft und schränken den allgemeinen Erfindungsgedanken nicht ein. Es zeigen

Fig. 1 eine schematische Schnittdarstellung eines erfindungsgemäßen Feldhäckslers auf einem Feld;

Fig. 2 eine schematische Schnittdarstellung eines Teils des Feldhäckslers aus Fig. 1 in einem ersten Zustand

Fig. 3    eine schematische Schnittdarstellung eines Teils des Feldhäckslers aus Fig. 1 in einem zweiten Zustand; sowie

Fig. 4    ein Flussdiagramm, welches die Funktionsweise einer Steuereinheit des Feldhäckslers veranschaulicht.

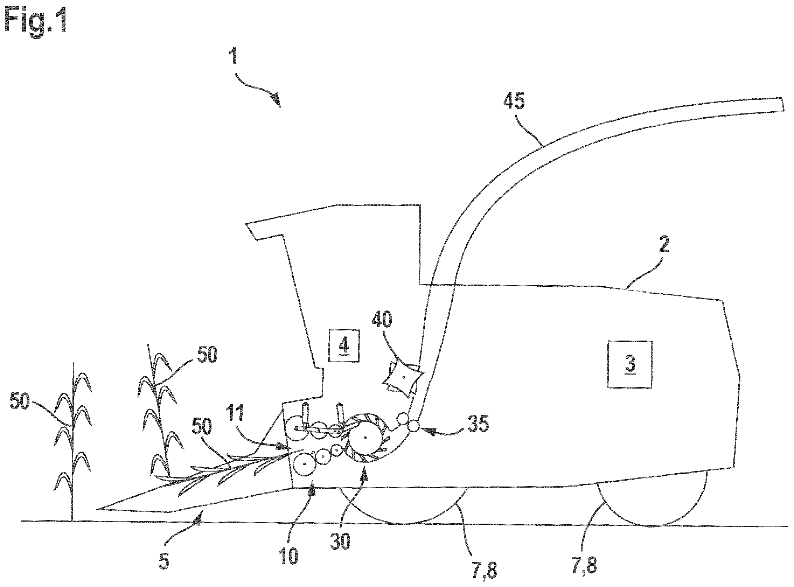

Fig. 1 zeigt einen erfindungsgemäßen Feldhäcksler 1 auf einem Feld mit Erntegut 50, z.B. Mais. Der Feldhäcksler weist einen Rahmen 2 auf, der auf Antriebsrädern 8 aufsteht, die Teil eines Fahrantriebs 7 sind. Die Antriebskraft liefert ein Motor 3, z.B. ein Dieselmotor. Vorderseitig weist der Feldhäcksler einen Erntevorsatz 5 auf, mittels dessen Erntegut 50 (auf einer Breite von mehreren Reihen, z.B. acht bis vierzehn Reihen) geschnitten und einer Einzugsvorrichtung 10 zugeführt wird. Die Einzugsvorrichtung 10 weist in diesem Fall drei Walzenpaare 12 auf, von denen jedes aus einer unteren Vorpresswalze 13 sowie einer oberen Vorpresswalze 14 gebildet ist. Die unteren Vorpresswalzen 13 sind jeweils um bezüglich des Rahmens 2 stationäre Walzenachsen A drehbar. Die oberen Vorpresswalzen 14 sind um obere Walzenachsen B drehbar an einem ersten Schwenkarm 15 gelagert, welcher seinerseits über eine erste Schwenkachse C mit einem zweiten Schwenkarm 16 verbunden ist. Der zweite Schwenkarm 16 ist um eine zweite Schwenkachse D gegenüber dem Rahmen 2 schwenkbar. Sämtliche Vorpresswalzen 13, 14 sind durch Kraftübertragung vom Motor 3 antreibbar.

Zwischen den Walzenpaaren 12 ist ein Einzugskanal 11 definiert, durch welchen das Erntegut 50 von den angetriebenen Vorpresswalzen 13, 14 hindurchgefördert wird. Hierdurch wird das Erntegut 50 einer Häckselvorrichtung 30 zugeführt, die eine Häckseltrommel 31 aufweist. Diese ist, ebenfalls durch Kraftübertragung vom Motor 3, um eine Trommelachse E angetrieben. Entlang ihres Umfangs verteilt weist sie eine Mehrzahl von Messern 32 auf, die aufgrund der Drehung der Häckseltrommel 31 in dichtem Abstand an einer stationären Gegenschneide 33 vorbeigeführt werden. Hierdurch erfolgt zum einen ein Zerschneiden des Ernteguts 50, zum anderen wird auch eine Zugkraft auf das Erntegut 50 ausgeübt, die bestrebt ist, dieses aus dem Einzugskanal 11 heraus zur Häckseltrommel 31 zu ziehen. Das zerkleinerte Erntegut 50 gelangt im weiteren Verlauf zu einem Aufbereiter 35, der im Falle von Mais als Corncracker ausgebildet ist und ein Aufquetschen der Maiskörner bewirkt. Schließlich wird das Erntegut 50 durch einen ebenfalls drehbar angetriebenen Nachbeschleuniger 40 erfasst, der es mit hoher Geschwindigkeit durch einen Auswurfbogen 45 herausschleudert, um das Erntegut 50 auf ein hier nicht dargestelltes Begleitfahrzeug überzuladen.

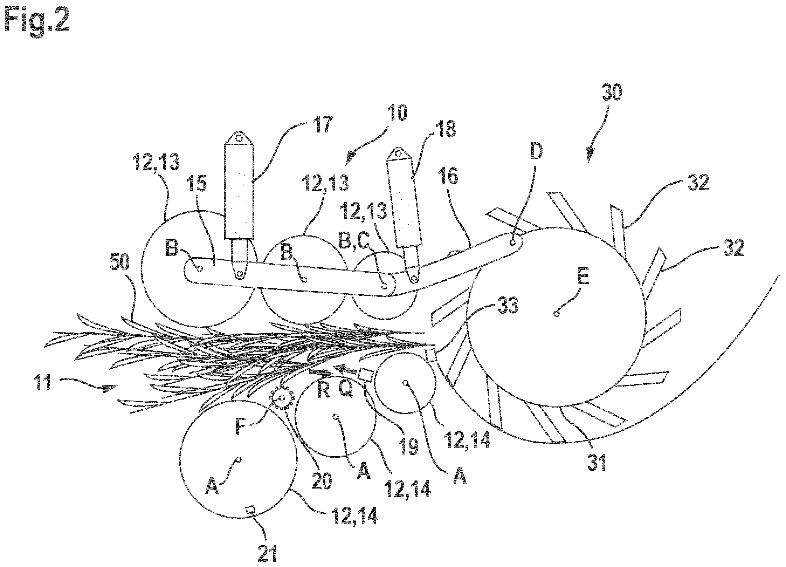

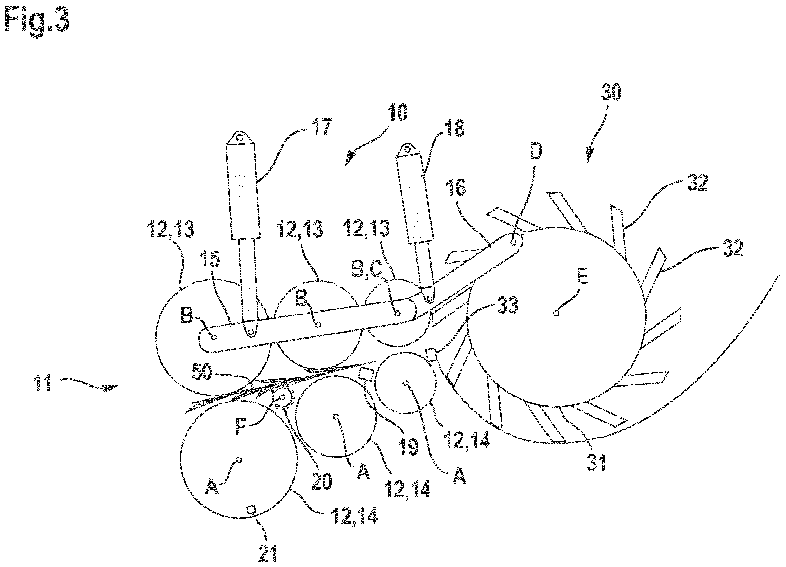

Der erste Schwenkarm 15 ist durch wenigstens einen ersten Aktor 17 mit dem Rahmen 2 verbunden, während der zweite Schwenkarm durch wenigstens einen zweiten Aktor 18 mit dem Rahmen verbunden ist. Die Aktoren 17, 18 sind in diesem Fall hydraulisch betrieben und von einer Steuereinheit 4 des Feldhäckslers 1 steuerbar. Durch Ein- bzw. Ausfahren der Aktoren 17, 18 können die Schwenkarme 15, 16 verstellt werden, wodurch eine Öffnungsweite des Einzugskanals 11 angepasst werden kann. Hierdurch kann einerseits eine größere Menge an Erntegut 50, wie in Fig. 2 dargestellt, sowie andererseits eine geringere Menge, wie in Fig. 3 dargestellt, geführt werden. Außerdem kann durch die Aktoren 17, 18 in Abhängigkeit von einer Ansteuerung durch die Steuereinheit 4 eine veränderbare Presskraft erzeugt werden, mit welcher die Walzenpaare 12 auf das Erntegut 50 einwirken. Dabei soll zum einen das Erntegut 50 ausreichend komprimiert werden, um ein effektives Zerschneiden durch die Häckselvorrichtung 30 zu ermöglichen. Zum anderen soll die Presskraft so gewählt werden, dass ein Schlupf zwischen den Vorpresswalzen 13, 14 einerseits und dem Erntegut 50 andererseits verhindert wird. Mit anderen Worten, eine durch die Vorpresswalzen 13, 14 vorgegebene Fördergeschwindigkeit $v_F$, welche annähernd der Tangentialgeschwindigkeit der Mantelfläche der jeweiligen Vorpresswalze 13, 14 entspricht, sollte - bis auf geringfügige, unvermeidbare Abweichungen - einer tatsächlichen Erntegutgeschwindigkeit $v_G$ des Ernteguts 50 entsprechen. Eine wesentliche Abweichung der beiden Geschwindigkeiten würde dazu führen, dass die Schnittlänge des Ernteguts 50 an der Häckselvorrichtung 30 von einem vorgesehenen Wert abweicht. Der Schlupf S kann definiert werden als:

$$S = \frac{V_F - V_G}{V_F}$$

Um einen wesentlichen bzw. relevanten Schlupf erkennen zu können, ist die Steuereinheit 4 mit Sensoren 19, 20 verbunden, mittels derer sie die Erntegutgeschwindigkeit ermitteln kann. Zum einen ist ein aktiver Sensor 19 vorgesehen, der bspw. als Ultraschallsensor, Radar-Sensor oder Lidar-Sensor ausgebildet sein kann. Er sendet ein Detektionssignal Q aus, das wenigstens teilweise vom Erntegut 50 als Reflexionssignal R zurückgeworfen und vom aktiven Sensor 19 empfangen wird. Anhand der Charakteristika des Reflexionssignals R, bspw. einer Doppler-Verschiebung, kann die Erntegutgeschwindigkeit $v_G$ gemessen werden.

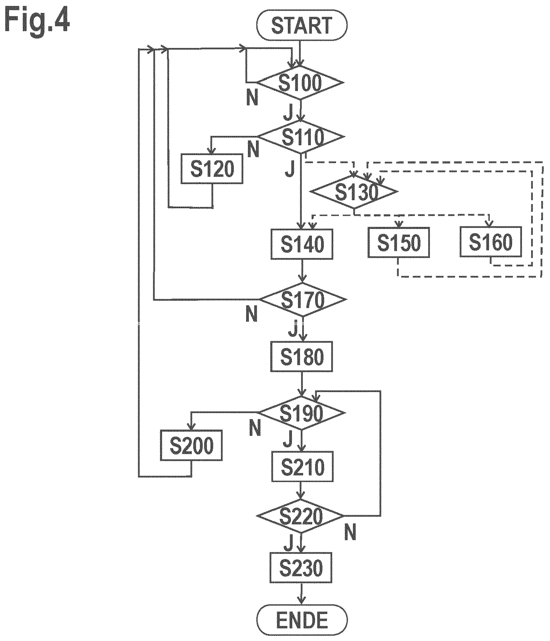

Alternativ oder auch zusätzlich kann die Erntegutgeschwindigkeit mittels eines Spornrads 20 ermittelt werden, das um eine Radachse F drehbar am Rahmen 2 gelagert ist. Das Spornrad 20 ist so angeordnet, dass es mit dem Erntegut 50 im Einzugskanal 11 in Kontakt kommt und durch dessen Bewegung passiv mitgedreht wird. Aus der Drehzahl des Spornrads 20 lässt sich somit die Erntegutgeschwindigkeit ableiten. Die Fördergeschwindigkeit $v_F$ kann entweder aus den Betriebsparametern des Antriebs der Einzugsvorrichtung 10 ermittelt werden oder optional mittels eines Drehzahlsensors 21, der hier einer unteren Vorpresswalze 14 zugeordnet ist. Die Steuereinheit kann über eine Ansteuerung der Aktoren 17, 18 die Presskraft beeinflussen. Außerdem kann sie die Fördergeschwindigkeit der Einzugsvorrichtung 10 beeinflussen sowie über den Fahrantrieb 7 eine Fahrgeschwindigkeit des Feldhäckslers 1. Die Steuereinheit 4 versucht während des Erntebetriebs vor allem, den Schlupf S zu begrenzen. Das zugrunde liegende Verfahren wird nachfolgend anhand des Flussdiagramms in Fig.4 erläutert.

Nach dem Start überprüft die Steuereinheit 4 in Schritt S100, ob der Absolutbetrag der Differenz $\Delta v$ zwischen der Fördergeschwindigkeit $v_F$ sowie die Erntegutgeschwindigkeit $v_G$ einen vorgegebenen Minimalwert $v_{min}$ überschreitet (d.h., $|v_F-v_G|>v_{min}$). Falls nein, erfolgt zunächst keine weitere Aktion und das Verfahren kehrt zu Schritt S100 zurück. Falls ja, erkennt die Steuereinheit 4 hieran einen wesentlichen Schlupf, d.h. eine Schlupf, der über das normale, unvermeidliche Maß hinausgeht. In Schritt S110 wird unterschieden, ob der die Differenz positiv ist (also die Fördergeschwindigkeit $v_F$ größer als die Erntegutgeschwindigkeit $v_G$). Falls nein, wird in Schritt S120 eine Gegenmaßnahme eingeleitet, indem die Steuereinheit 4 mittels der Aktoren 17, 18 die Presskraft erhöht, wodurch einen Kraftschluss und/oder Formschluss zwischen den Walzen 13, 14 und dem Erntegut 50 verstärkt wird. Dies kann z.B. in der in Fig.3 dargestellten Situation der Fall sein, die z.B. einem Einfahren in den Bestand oder einem Ausfahren aus dem Bestand entspricht, wobei nur wenig Erntegut 50 im Einzugskanal 11 vorhanden ist. Die Öffnungsweite ist sehr gering. Es könnte bei zu geringer Presskraft dazu kommen, dass einzelne Pflanzen bzw. Pflanzenteile zwischen den Vorpresswalzen 13, 14 hindurchgezogen werden. In diesem Fall ist die Erntegutgeschwindigkeit höher als die Fördergeschwindigkeit, somit liegt eine negative Differenz vor sowie ein negativer Schlupf. Dem wird durch die Erhöhung der Presskraft entgegengewirkt. Anschließend kehrt das Verfahren zu Schritt S100 zurück. Falls der Schlupf weiter besteht, kann die Presskraft erneut erhöht werden.

Wird in Schritt S110 erkannt, dass ein positiver Schlupf vorliegt, wird in Schritt S140 als erste Gegenmaßnahme die Presskraft erhöht. Allerdings kehrt das Verfahren nicht unmittelbar zu Schritt S100 zurück, sondern es wird in Schritt S170 (anhand neu ermittelter Geschwindigkeitswerte) erneut geprüft, ob der Absolutbetrag der Differenz über dem Minimalwert $v_{min}$ liegt, um festzustellen, ob die Erhöhung der Presskraft effektiv war. Alternativ könnte auch geprüft werden, ob sich der Absolutwert erhöht hat. Falls die Überprüfung in Schritt S170 negativ verläuft, war die Erhöhung der Presskraft effektiv und das Verfahren kehrt zu Schritt S100 zurück. Verläuft die Überprüfung positiv, war die Erhöhung der Presskraft unzureichend und es wird eine zweite Gegenmaßnahme eingeleitet, indem in Schritt S180 die Fördergeschwindigkeit $v_F$ erhöht wird. Hieraus resultiert eine größere Schnittlänge, was nicht ideal ist, aber vorübergehend akzeptabel ist, um eventuell aufgestautes Erntegut schneller aus dem Einzugskanal herauszufördern. Um sicherzugehen, dass der (fortbestehende) Schlupf tatsächlich mit aufgestautem Erntegut im Zusammenhang steht, könnte in Schritt S170 zusätzlich geprüft werden, ob die Öffnungsweite über einem bestimmten Wert liegt.

In Schritt S190 wird (anhand neu ermittelter Geschwindigkeitswerte) erneut geprüft, ob der Absolutbetrag der Differenz über dem Minimalwert $v_{min}$ liegt, um festzustellen, ob die Erhöhung der Fördergeschwindigkeit $v_F$ effektiv war. Liegt der Absolutbetrag nicht mehr über dem Minimalwert, wird in Schritt S200 die Fördergeschwindigkeit $v_F$ wieder auf den ursprünglichen Wert reduziert und das Verfahren kehrt zu Schritt S100 zurück. Wird der Minimalwert weiterhin überschritten, wird eine dritte Gegenmaßnahme eingeleitet, indem in Schritt S210 die Fahrgeschwindigkeit verringert wird. Hierdurch wird der Erntegutdurchsatz verringert, wodurch auch die Einzugsvorrichtung 10 entlastet wird und ein evtl. bestehender Erntegutstau besser abgebaut werden kann. In Schritt S220 wird überprüft, ob die Erntegutgeschwindigkeit $v_G$ Null beträgt bzw. unter einer Minimalgeschwindigkeit liegt, was auf eine Blockierung der Einzugsvorrichtung 10 hindeuten würde. Ist dies der Fall, wird in Schritt S230 der Feldhäcksler angehalten, d.h. die Fahrgeschwindigkeit auf Null reduziert, und das Verfahren endet. Andernfalls kehrt das Verfahren zu Schritt S190 zurück. Falls die Überprüfung dort negativ ausfällt, kann in Schritt S200 auch die Reduzierung der Fahrgeschwindigkeit rückgängig gemacht werden.

Neben der Heranziehung der Differenz $\Delta v$ bzw. des Absolutbetrags derselben, kann auch eine zeitliche Veränderung betrachtet werden. Gemäß einer optionalen Variante des Verfahrens folgt nach Schritt S110 nicht unmittelbar Schritt S140, sondern die zeitliche Veränderung der Differenz wird in Schritt S130 mit einem ersten Schwellwert und einem höheren zweiten Schwellwert verglichen. Es könnte alternativ auch eine zeitliche Veränderung des Schlupfs S mit Schwellwerten verglichen werden. Liegt die Veränderung unterhalb des ersten Schwellwerts, fährt das Verfahren mit Schritt S140 fort. Liegt sie über dem ersten, aber unter dem zweiten Schwellwert, werden in Schritt S150 sowohl die Presskraft als auch die Fördergeschwindigkeit erhöht. D.h. es wird nicht überprüft, ob eine Erhöhung der Presskraft allein ausreichend gewesen wäre. Liegt die Veränderung über dem zweiten Schwellwert, werden in Schritt S160 die Presskraft und die Fördergeschwindigkeit erhöht und zusätzlich wird die Fahrgeschwindigkeit verringert. Nach Schritt S150 und S160 kehrt das Verfahren jeweils zu Schritt S130 zurück. Wird schließlich festgestellt, dass die Veränderung unter dem ersten Schwellwert liegt, fährt das Verfahren mit Schritt S140 fort, wobei in einem nicht dargestellten Zwischenschritt die Erhöhung der Fördergeschwindigkeit und/oder die Verringerung der Fahrgeschwindigkeit rückgängig gemacht werden können.

Statt zur Feststellung eines wesentlichen Schlupfs, z.B. in Schritt S100, nur den Absolutwert der aktuellen Differenz $\Delta v$ zu betrachten, kann auch dessen Verlauf über ein gewisses Zeitintervall als Kriterium dienen. So kann die Steuereinheit prüfen, ob der Absolutwert während eines ersten Zeitintervalls durchgehen den Minimalwert $v_{min}$ überschritten hat. Alternativ oder zusätzlich kann sie prüfen, ob der Absolutwert während eines zweiten Zeitintervalls (welches normalerweise länger ist als das erste Zeitintervall) den Minimalwert mehrmals überschritten hat, z.B. dreimal oder fünfmal.

Diese Varianten können verhindern, dass ein kurzzeitiges, evtl. unbedeutendes Überschreiten des Minimalwerts sofort Gegenmaßnahmen auslöst.

Die Steuereinheit 4 kann neben den geschilderten Gegenmaßnahmen zur Schlupfvermeidung auch ein Anlaufen bzw. Wiederanlaufen der Einzugsvorrichtung 10 unterstützen. Dies kann insbesondere nach einer Verstopfung der Einzugsvorrichtung 10 sinnvoll sein, da beim Wiederanlaufen oftmals eine große Menge z.T. vorkomprimierten Ernteguts 50 gewissermaßen als Paket in die Einzugsvorrichtung 10 gelangt. Um es der Einzugsvorrichtung 10 zu erleichtern, dieses vorkomprimierte Paket aufzunehmen und ggf. ein erneutes Verstopfen zu verhindern, wird während einer Anlaufzeit eine geringere Presskraft eingestellt, welche zum Ende der Anlaufzeit oder danach erhöht werden kann. Hierdurch kann auch unabhängig davon, ob eine Verstopfung vorgelegen hat, kann sich ein Erntegutstrom anfänglich besser aufbauen. Während der Anlaufzeit können auch die Gegenmaßnahmen zur Schlupfverhinderung vorübergehend ausgesetzt werden, da z.B. eine Presskrafterhöhung in dieser Zeit kontraproduktiv wäre.

**Patentansprüche**

1. Feldhäcksler (1) mit einer Einzugsvorrichtung (10), die dazu ausgebildet ist, vom Feldhäcksler (1) aufgenommenes Erntegut (50) durch einen Einzugskanal (11) einer Häckselvorrichtung (30) zuzuführen und durch Ausüben einer Presskraft vorzupressen, und die zur Anpassung einer Öffnungsweite des Einzugskanals (11) verstellbar ist, wobei

   eine Erntegutgeschwindigkeit $v_G$ im Bereich des Einzugskanals (11) durch wenigstens einen Sensor (19, 20) erfassbar ist und eine Steuereinheit (4) dazu eingerichtet ist, anhand einer Differenz $\Delta v$ zwischen einer Fördergeschwindigkeit $v_F$ der Einzugsvorrichtung (10) und der erfassten Erntegutgeschwindigkeit $v_G$ einen Schlupf S zwischen dem Erntegut (50) und der Einzugsvorrichtung (10) zu erkennen und daraufhin wenigstens eine Gegenmaßnahme einzuleiten, um dem Schlupf S entgegenzuwirken, **dadurch gekennzeichnet, dass**

   die Steuereinheit (4) dazu eingerichtet ist, anhand der Differenz $\Delta v$ zwischen der Fördergeschwindigkeit $v_F$ der Einzugsvorrichtung (10) und der erfassten Erntegutgeschwindigkeit $v_G$ eine zeitliche Veränderung des Schlupfs S zwischen dem Erntegut (50) und der Einzugsvorrichtung (10) zu erkennen und in Abhängigkeit hiervon wenigstens eine Gegenmaßnahme auszuwählen und einzuleiten, um dem Schlupf S entgegenzuwirken.

2. Feldhäcksler nach Anspruch 1, **dadurch gekennzeichnet, dass** die Steuereinheit (4) dazu eingerichtet ist, den Schlupf S daran zu erkennen, dass der Absolutwert der Differenz $\Delta v$ einen definierten Minimalwert $v_{min}$ überschreitet.

3. Feldhäcksler nach Anspruch 2, **dadurch gekennzeichnet, dass** die Steuereinheit (4) dazu eingerichtet ist, den Schlupf S daran zu erkennen, dass der Minimalwert $v_{min}$ während eines vorgegebenen ersten Zeitintervalls durchgehend überschritten wird.

4. Feldhäcksler nach einem der Ansprüche 2 - 3, **dadurch gekennzeichnet, dass** die Steuereinheit (4) dazu eingerichtet ist, den Schlupf $S$ daran zu erkennen, dass der Minimalwert $v_{min}$ während eines vorgegebenen zweiten Zeitintervalls mehrmals überschritten wird.

5. Feldhäcksler nach einem der vorangehenden Ansprüche, **dadurch gekennzeichnet, dass** die Steuereinheit (4) dazu eingerichtet ist, festzustellen, wenn eine Gegenmaßnahme unzureichend ist, um dem Schlupf S entgegenzuwirken, und im Falle einer positiven Differenz $\Delta v$ daraufhin wenigstens eine folgende Gegenmaßnahme einzuleiten.

6. Feldhäcksler nach einem der vorangehenden Ansprüche, **dadurch gekennzeichnet, dass** die Einzugsvorrichtung (10) aktorisch verstellbar ist und die Steuereinheit (4) dazu eingerichtet ist, die Presskraft aktorisch zu beeinflussen, wobei eine Gegenmaßnahme darin besteht, die Presskraft zu erhöhen.

7. Feldhäcksler nach einem der vorangehenden Ansprüche, **dadurch gekennzeichnet, dass** die Steuereinheit (4) dazu eingerichtet ist, die Fördergeschwindigkeit $v_F$ zu beeinflussen, wobei eine Gegenmaßnahme darin besteht, die Fördergeschwindigkeit $v_F$ zu erhöhen.

8. Feldhäcksler nach einem der vorangehenden Ansprüche, **dadurch gekennzeichnet, dass** die Steuereinheit (4) dazu eingerichtet ist, eine Fahrgeschwindigkeit des Feldhäckslers (1) zu beeinflussen, wobei eine Gegenmaßnahme darin besteht, die Fahrgeschwindigkeit zumindest zu begrenzen.

9. Feldhäcksler nach einem der vorangehenden Ansprüche, **dadurch gekennzeichnet, dass** die Steuereinheit (4) dazu eingerichtet ist, den Feldhäcksler (1) zu stoppen, wenn bei positiver Differenz $\Delta v$ die Erntegutgeschwindigkeit $v_G$ Null beträgt.

10. Feldhäcksler nach einem der vorangehenden Ansprüche, **dadurch gekennzeichnet, dass** ein Erhöhen der Presskraft eine erste Gegenmaßnahme bildet, wobei im Falle einer positiven Differenz $\Delta v$ ein Erhöhen der Fördergeschwindigkeit eine zweite Gegenmaßnahme bildet und ein Begrenzen der Fahrtgeschwindigkeit eine dritte Gegenmaßnahme bildet.

11. Feldhäcksler nach einem der vorangehenden Ansprüche, **dadurch gekennzeichnet, dass** die Erntegutgeschwindigkeit $v_G$ durch wenigstens einen Sensor (19) berührungslos erfassbar ist.

12. Feldhäcksler nach einem der vorangehenden Ansprüche, **dadurch gekennzeichnet, dass** wenigstens ein Sensor (19) als aktiver Sensor dazu ausgebildet ist, ein Detektionssignal (Q) zum Erntegut (50) zu senden und vom Erntegut (50) ein Reflexionssignal (R) zu empfangen.

13. Feldhäcksler nach einem der vorangehenden Ansprüche, **dadurch gekennzeichnet, dass** die Erntegutgeschwindigkeit $v_G$ durch wenigstens einen Sensor (20) durch Kontakt mit dem Erntegut (50) erfassbar ist.

14. Verfahren zum Betreiben eines Feldhäckslers (1) mit einer Einzugsvorrichtung (10), die vom Feldhäcksler (1) aufgenommenes Erntegut (50) durch einen Einzugskanal (11) einer Häckselvorrichtung (30) zuführt und durch Ausüben einer Presskraft vorpresst und die zur Anpassung einer Öffnungsweite des Einzugskanals (11) verstellbar ist, wobei

eine Erntegutgeschwindigkeit $v_G$ im Bereich des Einzugskanals (11) durch wenigstens einen Sensor (19, 20) erfasst wird, anhand einer Differenz $\Delta v$ zwischen einer Fördergeschwindigkeit $v_F$ der Einzugsvorrichtung (10) und der erfassten Erntegutgeschwindigkeit $v_G$ ein bestehender Schlupf zwischen dem Erntegut (50) und der Einzugsvorrichtung (10) erkannt wird und daraufhin wenigstens eine Gegenmaßnahme eingeleitet wird, um dem Schlupf entgegenzuwirken,
**dadurch gekennzeichnet, dass**

anhand einer Differenz $\Delta v$ zwischen einer Fördergeschwindigkeit $v_F$ der Einzugsvorrichtung (10) und der erfassten Erntegutgeschwindigkeit $v_G$ eine zeitliche Veränderung eines Schlupfs S zwischen dem Erntegut (50) und der Einzugsvorrichtung (10) erkannt wird und in Abhängigkeit hiervon wenigstens eine Gegenmaßnahme ausgewählt und eingeleitet wird, um dem Schlupf S entgegenzuwirken.

**Claims**

1. Forage harvester (1) comprising an intake device (10) which is designed to feed crop material (50), taken up by the forage harvester (1), through an intake channel (11) to a chopping device (30) and to pre-compress it by applying a pressing force, and which is adjustable in order to adapt the opening width of the intake channel (11), wherein

a crop material speed $v_G$ in the region of the intake channel (11) can be detected by means of at least one sensor (19, 20), and a control unit (4) is configured to recognize slippage S between the crop material (50) and the intake device (10) on the basis of a difference $\Delta v$ between a conveying speed $v_F$ of the intake device (10) and the detected crop material speed $V_G$, and then to initiate at least one countermeasure in order to counteract the slippage S,
**characterized in that**
the control unit (4) is configured to recognize a change over time of the slippage S between the crop material (50) and the intake device (10) on the basis of a difference $\Delta v$ between a conveying speed $V_F$ of the intake device (10) and the detected crop material speed $V_G$, and on the basis thereof, to select and initiate at least one countermeasure in order to counteract the slippage S.

2. Forage harvester according to claim 1, **characterized in that** the control unit (4) is configured to recognize the slippage S when the absolute value of the difference $\Delta v$ exceeds a defined minimum value $v_{min}$.

3. Forage harvester according to claim 2, **characterized in that** the control unit (4) is configured to recognize the slippage S when the minimum value $v_{min}$ is continuously exceeded during a predetermined first time interval.

4. Forage harvester according to any of claims 2-3, **characterized in that** the control unit (4) is configured to recognize the slippage S when the minimum

value $v_{min}$ is exceeded multiple times during a predetermined second time interval.

5. Forage harvester according to any of the preceding claims, **characterized in that** the control unit (4) is configured to establish when a countermeasure is insufficient to counteract the slippage $S$, and then, in the case of a positive difference $\Delta v$, to initiate at least one subsequent countermeasure.

6. Forage harvester according to any of the preceding claims, **characterized in that** the intake device (10) is adjustable by means of an actuator and the control unit (4) is configured to influence the pressing force by means of an actuator, wherein one countermeasure consists in increasing the pressing force.

7. Forage harvester according to any of the preceding claims, **characterized in that** the control unit (4) is configured to influence the conveying speed $V_F$, wherein one countermeasure consists in increasing the conveying speed $V_F$.

8. Forage harvester according to any of the preceding claims, **characterized in that** the control unit (4) is configured to influence the driving speed of the forage harvester (1), wherein one countermeasure consists in at least limiting the driving speed.

9. Forage harvester according to any of the preceding claims, **characterized in that** the control unit (4) is configured to stop the forage harvester (1) when, in the case of a positive difference $\Delta v$, the crop material speed $V_G$ is zero.

10. Forage harvester according to any of the preceding claims, **characterized in that** increasing the pressing force constitutes a first countermeasure, wherein, in the case of a positive difference $\Delta v$, increasing the conveying speed constitutes a second countermeasure and limiting the driving speed constitutes a third countermeasure.

11. Forage harvester according to any of the preceding claims, **characterized in that** the crop material speed $V_G$ can be detected contactlessly by means of at least one sensor (19).

12. Forage harvester according to any of the preceding claims, **characterized in that** at least one sensor (19) is designed as an active sensor, to send a detection signal (Q) to the crop material (50), and to receive a reflection signal (R) from the crop material (50).

13. Forage harvester according to any of the preceding claims, **characterized in that** the crop material speed $V_G$ can be detected by at least one sensor (20) by means of contact with the crop material (50).

14. Method for operating a forage harvester (1) comprising an intake device (10) which feeds crop material (50), taken up by the forage harvester (1), through an intake channel (11) to a chopping device (30) and pre-compresses it by applying a pressing force, and is adjustable in order to adapt the opening width of the intake channel (11),
wherein

a crop material speed $V_G$ in the region of the intake channel (11) can be detected by at least one sensor (19, 20), an existing slippage between the crop material (50) and the intake device (10) can be detected on the basis of a difference $\Delta v$ between a conveying speed $v_F$ the intake device (10) and the detected crop material speed $V_G$, and at least one countermeasure is then initiated in order to counteract the slippage, **characterized in that,**
on the basis of a difference $\Delta v$ between a conveying speed $v_F$ of the intake device (10) and the detected crop material speed $V_G$, a change over time of the slippage S between the crop material (50) and the intake device (10) is detected and, on the basis thereof, at least one countermeasure is selected and initiated in order to counteract slippage S.

## Revendications

1. Ensileuse (1) comportant un dispositif d'introduction (10) qui est conçu pour acheminer la récolte (50) reçue par l'ensileuse (1) à travers un canal d'introduction (11) jusqu'à un dispositif de hachage (30) et pour la prépresser en exerçant une force de pressage, et qui est réglable pour adapter une largeur d'ouverture du canal d'introduction (11),
dans laquelle

une vitesse de récolte $v_G$ peut être détectée dans la zone du canal d'introduction (11) par au moins un capteur (19, 20) et une unité de commande (4) est configurée pour détecter, à l'aide d'une différence $\Delta v$ entre une vitesse de transport $v_F$ du dispositif d'introduction (10) et la vitesse de récolte $v_G$ détectée, un glissement S entre la récolte (50) et le dispositif d'introduction (10) et pour déclencher ensuite au moins une contre-mesure afin de contrer le glissement $S$, **caractérisée en ce que**
l'unité de commande (4) est configurée pour détecter, à l'aide de la différence $\Delta v$ entre la vitesse de transport $v_F$ du dispositif d'introduction (10) et la vitesse de récolte $v_G$ détectée, une variation dans le temps du glissement $S$ entre la récolte (50) et le dispositif d'introduction (10) et, en fonction de ceci, pour sélectionner et déclencher au moins une contre-mesure afin de contrer le glissement *S*.

2. Ensileuse selon la revendication 1, **caractérisée en ce que** l'unité de commande (4) est configurée pour détecter le glissement *S* par le fait que la valeur absolue de la différence *Δv* dépasse une valeur minimale $v_{min}$ définie.

3. Ensileuse selon la revendication 2, **caractérisée en ce que** l'unité de commande (4) est configurée pour détecter le glissement *S* par le fait que la valeur minimale $v_{min}$ est dépassée en permanence pendant un premier intervalle de temps prédéfini.

4. Ensileuse selon l'une des revendications 2 à 3, **caractérisée en ce que** l'unité de commande (4) est configurée pour détecter le glissement *S* par le fait que la valeur minimale $v_{min}$ est dépassée plusieurs fois pendant un second intervalle de temps prédéfini.

5. Ensileuse selon l'une des revendications précédentes, **caractérisée en ce que** l'unité de commande (4) est configurée pour constater si une contre-mesure est insuffisante pour contrer le glissement *S* et, en cas de différence *Δv* positive, pour déclencher ensuite au moins une contre-mesure subséquente.

6. Ensileuse selon l'une des revendications précédentes, **caractérisée en ce que** le dispositif d'introduction (10) est réglable par actionneur et l'unité de commande (4) est configurée pour influencer par actionneur la force de pressage, dans laquelle une contre-mesure consiste à augmenter la force de pressage.

7. Ensileuse selon l'une des revendications précédentes, **caractérisée en ce que** l'unité de commande (4) est configurée pour influencer la vitesse de transport $v_F$, dans laquelle une contre-mesure consiste à augmenter la vitesse de transport $v_F$.

8. Ensileuse selon l'une des revendications précédentes, **caractérisée en ce que** l'unité de commande (4) est configurée pour influencer une vitesse de déplacement de l'ensileuse (1), dans laquelle une contre-mesure consiste à au moins limiter la vitesse de déplacement.

9. Ensileuse selon l'une des revendications précédentes,

**caractérisée en ce que** l'unité de commande (4) est configurée pour arrêter l'ensileuse (1) lorsque, pour une différence *Δv* positive, la vitesse de récolte $v_G$ est nulle.

10. Ensileuse selon l'une des revendications précédentes, **caractérisée en ce qu'**une augmentation de la force de pressage constitue une première contre-mesure, dans laquelle, dans le cas d'une différence *Δv* positive, une augmentation de la vitesse de transport constitue une deuxième contre-mesure, et une limitation de la vitesse de déplacement constitue une troisième contre-mesure.

11. Ensileuse selon l'une des revendications précédentes, **caractérisée en ce que** la vitesse de récolte $v_G$ peut être détectée sans contact par au moins un capteur (19).

12. Ensileuse selon l'une des revendications précédentes, **caractérisée en ce qu'**au moins un capteur (19) est réalisé comme un capteur actif pour envoyer un signal de détection (Q) à la récolte (50) et pour recevoir un signal de réflexion (R) en provenance de la récolte (50).

13. Ensileuse selon l'une des revendications précédentes, **caractérisée en ce que** la vitesse de récolte $v_G$ peut être détectée par au moins un capteur (20) par contact avec la récolte (50).

14. Procédé permettant de faire fonctionner une ensileuse (1) avec un dispositif d'introduction (10) qui achemine la récolte (50) reçue par l'ensileuse (1) à un dispositif de hachage (30) par un canal d'introduction (11) et la prépresse en exerçant une force de pressage, et qui est réglable pour adapter une largeur d'ouverture du canal d'introduction (11), dans lequel

une vitesse de récolte $v_G$ est détectée dans la zone du canal d'introduction (11) par au moins un capteur (19, 20), un glissement existant entre la récolte (50) et le dispositif d'introduction (10) est détecté à l'aide d'une différence *Δv* entre une vitesse de transport $v_F$ du dispositif d'introduction (10) et la vitesse de récolte $v_G$ détectée, et au moins une contre-mesure est ensuite déclenchée pour contrer le glissement, **caractérisé en ce que** à l'aide d'une différence *Δv* entre une vitesse de transport $v_F$ du dispositif d'introduction (10) et la vitesse de récolte $v_G$ détectée, une variation dans le temps d'un glissement S entre la récolte (50) et le dispositif d'introduction (10) est détectée et, en fonction de ceci, au moins une contre-mesure est sélectionnée et déclenchée pour contrer le glissement $S$.

Fig.1

EP 4 209 124 B1

# Fig.2

Fig.3

Fig.4

START → S100 (J) → S110 (J) → S130 → S140 → S170 (J) → S180 → S190 (J) → S210 → S220 (J) → S230 → ENDE

S100 (N), S110 (N) → S120, S130 → S150 → S160, S170 (N), S190 (N) → S200, S220 (N)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013110551 A1